# EUROPEAN PATENT SPECIFICATION

(11) **EP 1 342 696 B1**
(45) Date of publication and mention of the grant of the patent: **07.06.2006**
(21) Application number: 02004969.8
(22) Date of filing: 05.03.2002
(51) Int. Cl.: C02F 1/461

(54) **Method and apparatus for controlling water system fouling**
Verfahren und Vorrichtung zur Überwachung der Verschmutzung von Wasseranlagen
Procédé et appareil pour contrôler l'encrassement d'une installation d'eau

(43) Date of publication of application: 10.09.2003
(73) Proprietor: Kraft, John V., Lipan, Texas 76462 (US); Holt, William, Seabrook, Texas 77586 (US)
(72) Inventor: Kraft, John V., Lipan, Texas 76462 (US); Holt, William, Seabrook, Texas 77586 (US)
(74) Representative: Heusler, Wolfgang

(56) References cited:
- DE-A- 2 035 198
- DE-A- 19 912 013
- US-B1- 6 350 385

## Description

### FIELD OF THE INVENTION

This invention relates generally to methods and devices used with water systems. More particularly, it relates to an improved method and apparatus for exposing water, flowing through a water system, to an ion generator whereby ions are fed into the water flow to prevent fouling of the water system by algae, nuisance invertebrates, microorganisms, and inorganic salts.

### BACKGROUND OF THE INVENTION

It has long been known that algae, nuisance invertebrates, microorganisms, and inorganic salts may foul water systems and lead to very significant water system inefficiencies. These inefficiencies result in increased energy consumption and increased maintenance demands that, in turn, increase overall operational and maintenance costs by several orders of magnitude. Ion generators have been employed in previous attempts to control algae, nuisance invertebrates, and microorganisms. Such ion generators are based on well-known principles of electrochemical reactions, one of which is referred to as electrolysis. Electrolysis is an electrochemical process by which electrical energy is used to promote chemical reactions that occur on the surface of functionally cooperating electrodes. One electrode, called the anode, involves the oxidation process where chemical species lose electrons. A second electrode, called the cathode, involves the reduction process where electrons are gained. In water, for example, oxygen is generated at the anode and hydrogen is generated at the cathode. The generation of hydrogen and oxygen in fresh water by the process of electrolysis will be weak due to the low electrical conductivity of the water. The oxygen generated aids in the prevention of the deposit of inorganic salts on the electrodes. The function of an ion generator is also to produce metal ions, typically copper ions or silver ions. Metal ion production is accomplished by use of an electrically charged metal anode that comprises atoms of the metal ions that are to be generated. It is the purpose of the ion generator to feed the metal ions out of the generator before they can be deposited on a cathode. The metal ions and oxygen, both of which are produced by the ion generator in the present application, are feed into the water stream of the water system to prevent fouling of the system by algae, nuisance invertebrates, microorganisms, and inorganic salts. One such system was devised by these inventors and is the subject of U.S. Pat. No. 6,350,385 issued to Holt, et al.

Also DE 20 35 198 A discloses an apparatus for generating ions within a water system which comprises a generally cylindric tank, a plurality of anodes and cathodes within the tank, an inlet pipe directing water into the tank and between the electrodes, and means for outletting water from the tank. The anodes and the cathodes may consist of copper.

The toxicity of copper and silver to aquatic organisms is well established although the exact mechanism is not well defined. The toxicity is related to the form and, in general, these heavy metals must be in an ionic form in order for them to be toxic to invertebrates, microorganisms and algae. The eradication of microorganisms is attributed to positively charged ions that are both surface active and microbiocidal. These ions attach themselves to the negatively charged bacterial cell wall of the microorganism and destroy cell wall permeability. This action, coupled with protein denaturation, induces cell lysis and eventual death. One advantage to the use of metal ionization is that eradication efficacy is wholly unaffected by water temperature. Chlorine, a commonly used antifouling chemical, is somewhat temperature dependent. Furthermore, the metal ions actually kill the microorganisms, and other microorganism promoting bacteria and protozoa, rather than merely suppress them, as in the case of chlorine. This minimizes the possibility of later recolonization. Other advantages of metal ionization compared to other eradication techniques include relatively low cost, straightforward installation, easy maintenance, and the presence of residual disinfectant throughout the system.

A copper or silver ion generator is, by way of specific example, an effective method for controlling *legionella* which is likely to be present in most water systems. *Legionella* is predominantly present in water cooling systems in microbial biofilms which become attached to surfaces submerged in the aquatic environment. These biofilms are typically found on the surfaces of pipes and stagnant areas of the water cooling system. Many components of most any man-made water system can be considered to be an amplifier for the organism (i.e., the organism can find a niche where it can grow to higher levels, or be amplified) or a disseminator of the organism. Examples of man-made amplifiers include cooling towers and evaporative condensers, humidifiers, potable water heaters and holding tanks, and conduits containing stagnant water. Showerheads, faucet aerators, and whirlpool baths may serve as amplifiers as well as disseminators. Human infection from exposure to *legionella*, or legionosis, can result in a pneumonia illness that is commonly referred to as Legionnaire' s disease, namesake of the famous 1976 outbreak in the United States in Philadelphia, Pennsylvania. Since the Philadelphia outbreak, about 1,400 cases are officially reported to the United States Center for Disease Control annually.

Other bacteria and protozoa can also colonize water cooling system surfaces and some have been shown to promote *legionella* replication. Amoebae and other ciliated protozoa are natural hosts for *legionella. Legionella* multiply intracellularly within amoebae trophozoites. *Legionella pneumophila* is known to infect five different genera of amoebae, most notably *Hartmanella vermiformis* and *Acanthamoeba. Legionella* can also multiply within the ciliated protozoa, *Tetrahymena.* Bacterial species that appear to provide *legionella* with growth-promoting factors include *Pseudomonas, Acinetobactor, Flavobacterium,* and *Alcaligenes.* Copper and silver ions are an effective method of control for each of these bacteria and protozoa. The controlled release of copper or silver ions has also been known to serve as an effective attachment and growth control for such marine organisms as algae, mussels, oysters and barnacles. Such ions can eliminate and control algae, for example, by inhibiting photosynthesis which leads to its demise.

In the experience of these inventors, users of present metal ion generators in industrial cooling water systems have reported problems such as bridging which leads to electrical shorting, electrical conductivity stratification which results in uneven electrode erosion, and plating of metal on the cathode, Bridging occurs because of the necessity of placing the anode and cathode in close proximity to one another in fresh water systems. One way of dealing with this problem is to periodically reverse polarity of the electrodes. Uneven electrode erosion due to electrical conductivity stratification occurs for the reason that nonuniform water flow occurs between electrodes. In present designs, the velocity of the water that flows between the electrodes is not generally constant over the electrode face. This leads to stratification of inorganic materials in the water that, in turn, produces electrical conductivity stratification. Finally, plating of the metal anode material on the cathode, as previously mentioned, completely defeats the purpose of the ion generator in the present application. When plating occurs, the metal ions are deposited on the cathode rather than being introduced into flow stream that is to be treated. In the experience of these inventors, each of these problems is related to water flow and to electrode spacing, which is required to be very close in fresh water systems. The spacing of the electrodes in close proximity to each other in fresh water systems is required if power system expectations are to be within reason, on the order of a few hundred watts. The system simply will not be economical if maximum power requirements exceed several kilowatts.

### SUMMARY OF THE INVENTION

It is, therefore, a principal object of this invention to provide an improved method and apparatus for exposing the water flow within a water system to an ion generation device wherein water velocity is increased between the electrodes of the ion generator. It is another object of this invention to provide such an improved method and apparatus where a water inlet is provided to create a high velocity flow within the system, which flow is directed between the ion generating electrodes. It is yet another object to provide such an improved method and apparatus where a double vortex flow is created following water flow from between the electrodes. It is yet another object to provide such an improved method and apparatus which avoids "dead zones," or areas where water velocities in the vicinity of the ion generator electrodes are low. It is still another object to provide such a method and apparatus in which a non-electrical conducting head is used to mount the electrodes of the ion generator and where a plurality of cooperatively alternating anodes and cathodes may be used. It is yet another object of the present invention to provide such an improved method and apparatus in which a discharge valve is provided to control the system water level within the ion generator thereby maintaining a minimum vertical velocity within the system. It is still another object to provide a self-cleaning elliptical or conical base to the flow tank. It is yet another object to provide such an improved method and apparatus wherein a sight glass is utilized to allow for visual inspection of anode wastage. It is still another object to provide such an improved method and apparatus wherein performance is optimized while manufacturing costs are not increased significantly.

The present invention has obtained these objects. It overcomes problems and disadvantages of prior systems by providing an improved method and apparatus in which water flowing through a water system is vigorously and turbulently exposed to a plurality of electrodes of an ion generator whereby ions that are generated are fed into the water flow to prevent fouling of the water system by algae, nuisance invertebrates, microorganisms, and inorganic salts. The present invention accomplishes this by providing an ion generator having a self-contained tank through which the water flows. The generally cylindrical containment tank includes an inlet pipe at the uppermost portion of the tank. An elliptical tank base includes an outlet pipe in combination with a tank clean out device at the lowermost portion of the tank. A tank cover is provided which serves as the non-electrical conducting head for a plurality of electrodes that extend downwardly and generally parallel to one another from the underside of the cover. When the tank cover is in place in its normal operating position, the electrodes are suspended from the tank cover within the containment tank. The inlet pipe is functionally configured to direct water between the electrodes. The electrodes are functionally configured, both in size and placement, to maximize water flow between them, thereby creating a double vortex flow following water flow between the electrodes. A sight glass is provided within the containment tank to allow for visualization and monitoring of the container contents, and in particular anode wastage or wear, during operation. The foregoing and other features of the improved method and apparatus of the present invention will be apparent from the detailed description that follows.

### BRIEF DESCRIPTION OF THE DRAWINGS

Fig. 1 is a front elevational view of a water system fouling control apparatus constructed in accordance with the present invention.
Fig. 2 is a top plan view of the water system fouling control apparatus shown in Fig. 1.
Fig. 3 is a partially sectioned front elevational view of the water system fouling control apparatus shown in Fig. 1 and taken along line 3 - 3 of Fig. 2.
Fig. 4 is a front, top and right side perspective view of the water system fouling control apparatus shown in Fig. 3.

### DETAILED DESCRIPTION

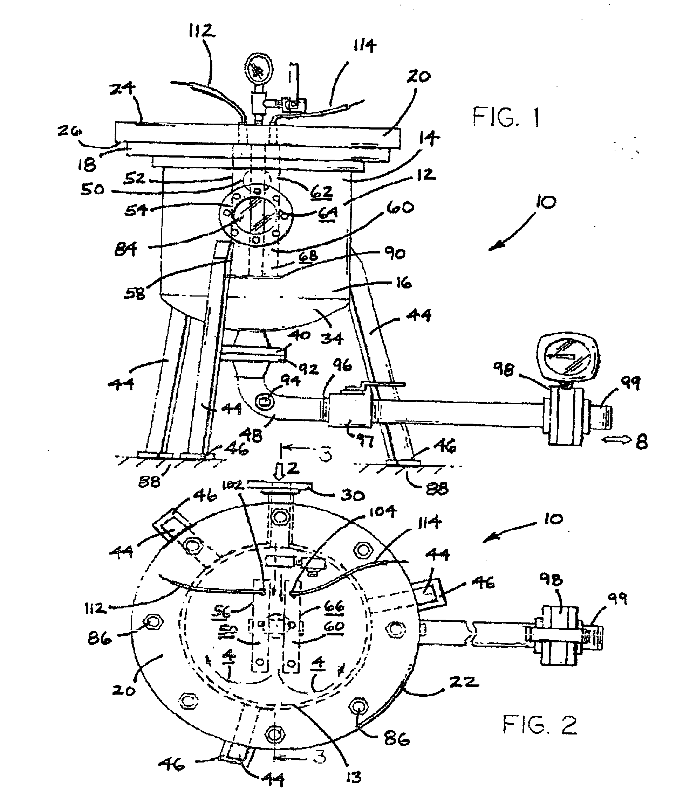

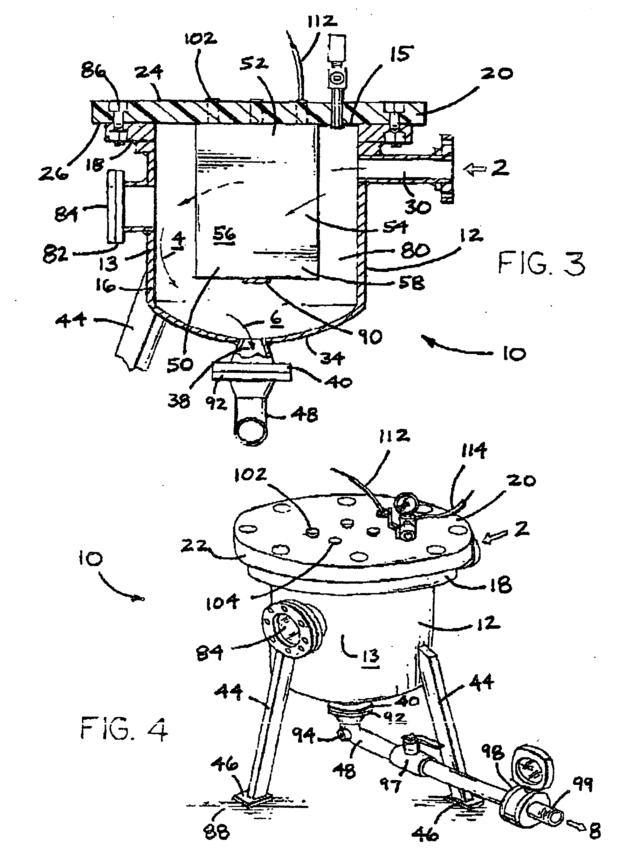

Referring now to the drawings in detail, wherein like numerals represent like elements throughout, Fig, 1 illustrates a preferred embodiment of a device that utilizes the improved method and apparatus of the present invention. An ion generator apparatus, generally identified 10, includes a containment tank 12 that is generally cylindrical in physical configuration The containment tank 12 includes an upper tank portion 14 and a lower tank portion 16 and is constructed of stainless steel in the preferred embodiment, although the material is not a limitation of this invention. The tank 12 also includes an upper tank portion aperture 15 and, situated about the perimeter of the upper tank portion aperture 15, an upper tank flange 18. The containment tank 12 is supported about its outer perimeter by a plurality of support legs 44, each support leg 44 being attached to the tank 12. Each leg 44 also includes a support foot 46 that rests upon a generally horizontal surface 88. As shown in Figs. 2 and 4, three such legs 44 are illustrated. It is to be understood that more legs 44 could be utilized if such was desired or required, the number of such legs 44 not being a functional limitation of the present invention.

Attachable to the upper tank flange 18 is a tank cover or lid 20. The lid 20 includes a lid perimeter 22, a top lid surface 24 and a lid underside surface 26. In the preferred embodiment, the lid 20 is constructed of a special polymar plastic material which provides strength, durability and electrical nonconductivity. The significance of this electrical nonconductive, or electrical insulating, feature will become apparent later in this detailed description. The lid 20 is attachable to the upper tank portion 14 by means of a plurality of fasteners 86, such as bolts, which are installed about the lid perimeter 22 and through the upper tank flange 18. See Figs. 2 and 3. Here again, the number of such fasteners 86 is not a functional limitation of the present invention. The number of fasteners 86 may be varied without deviating from the scope of this invention. The important feature of the fasteners 86 is that they prevent the lid 20 from coming away from the tank 12 and that they prevent rotation of the lid 20 about the tank 12.

Sealingly attached to the lower tank portion 16 is an elliptical head 34. The lowermost portion of the head 34 includes a centrally located bottom aperture 38. Attached to the aperture 38 is a bottom flange 40. Attached to the bottom flange 40 is an elbow 48 which includes a first flanged end 92, a discharge sampling valve 94, and a second end 96, Attached to the second end 96 is a ball valve 97, an inline flow meter 98 and a discharge pipe 99 through which tank discharge flow 8 is accomplished. The flow meter 98 may be wired to control inlet flow.

Attached to the underside 26 of the lid 20 are a number of functionally cooperating electrodes 50, 60. As shown in the preferred embodiment, one anode 50 and one cathode 60 is provided. It is to be understood that the number of such electrodes 50, 60 is not a functional limitation of the present invention. Other combinations could be provided, such as two anodes and two cathodes, and so on, without deviating from the scope of the present invention. As shown, the anode 50 and the cathode 60 are each fabricated in the shape of a rectangular prism. In the preferred embodiment, the anode 50 is made of silver as is the cathode 60. Again, the material from which each of the electrodes 50, 60 is made is not a limitation of the present invention, other than that the materials used must be functionally conducive to the process of electrolysis. The use of like material for the electrodes 50, 60 allows an electronic polarity reverser (not shown) to be used which reduces the rate of oxide buildup on the silver anode 50 which, in turn, reduces the time between scheduled anode cleanings.

The anode 50 includes a top anode portion 52, a central anode portion 54, a bottom anode portion 58, and a pair of anode faces 56, the anode faces 56 being generally parallel to one another and providing the greatest surface area of the anode 50. Similarly, the cathode 60 includes a top cathode portion 62, a central cathode portion 64, a bottom cathode portion 68, and a pair of cathode faces 66. The anode 50 is attached to the lid underside 26 by means of a plurality of anode fasteners 102. See Fig. 2. Similarly, the cathode 60 is attached to the lid underside 26 by means of a plurality of cathode fasteners 104. At the bottom portion 58 of the anode 50 and the bottom portion 68 of the cathode 60 is a stabilizing element 90. The stabilizing element 90 is functionally adapted to maintain the electrodes 50, 60 in substantially parallel planar relationship. In this parallel planar relation, the plane defined by each electrode 50, 60 is substantially parallel to the axis of the inlet pipe 30. See Figs. 2 and 3. As shown, one of the anode fasteners 102 is attached to a positive electrical lead 112 through which an electrical current may flow. Similarly, one of the cathode fasteners 104 is attached to the cathode 60 and is also attached to a negative, or grounding, lead 114. An electrical potential or voltage may be applied across the anode lead 112 and the cathode lead 114 and, therefore, across the anode 50 and across the cathode 60. In the preferred embodiment, a power supply on the order of several hundred watts may be applied to achieve the electrochemical process of electrolysis across the electrodes 50, 60.

The upper tank portion 14 also includes an inlet pipe 30 that provides a continuum with the interior 80 of the containment tank 12. As shown, the flow path 2 through the inlet pipe 30 is generally perpendicular to the axis of the tank interior 80. The tank 12, the elliptical head 34 and the inlet pipe 30 are functionally cooperative to allow water flow 2 through the inlet 30, into the tank interior 80 in a whirlpool-like or double vortex flow 4, and out the bottom aperture 38 of the head 34 in a discharge flow 6. See Figs. 2 and 3. The significance of this flow pattern will become apparent later in this detailed description. The containment tank 12 also includes a sight glass aperture (not shown) defined within the wall 13 of the tank 12. Attached to the aperture is a sight glass flange 82 and a sight glass 84. The purpose of the sight glass 84 is to provide visual access to the tank interior 80.

In application, water flow 2 is initiated to the interior 80 of the tank 12 by means of an inlet pipe 30. In this fashion, water enters the tank interior 80 and is directed to forcibly flow between the electrodes 50, 60. Upon exiting the area between the electrodes 50, 60, the water follows the annular wall surface 13 in a whirlpool-like or turbulent double vortex-type fashion. That is, the water flow is effectively "split" at that portion of the wall surface 13 immediately opposite the inlet and continues in two opposite directions back around the electrodes 50, 60 and along the wall surface 13. This double vortex turbulence facilitates the electrolysis process and the migration of silver ions away from the anode 50 and away from the cathode 60 before the ions have a chance to attach themselves to the cathode 60 thus defeating the purpose of ionic water treatment. The flow 4 continues about the electrodes 50, 60 until the water flow 6 discharges through the head aperture 38, the water being properly ionized at this point. The elliptical head 34 and the aperture 38 defined in it serves a "self-cleaning" function by discharging suspended solids contained within the flow stream 6. The water ionization at this point of discharge serves to control algae, nuisance invertebrates, microorganisms and inorganic salts lurking in other parts of the water system within which the ion generator assembly 10 of the present invention is incorporated. As the eletrolysis process continues, the electronic polarity reverser (not shown) cycles at reversing rates from 0.1 second to 1,000 minutes depending on rates of reversal deemed appropriate for a specific site operation. Gradually, the anode 50 effectively becomes used up as ions are given up to the water flow 4, The sight glass 84 allows the user to view the containment tank interior 80 to determine if anode wastage has occurred to the point that the anode 50 must be replaced. Replacement of the anode 50 is easily accomplished by removal of the tank lid 20, detachment of the anode lead 112, withdrawal of the anode fasteners 102, insertion of a new anode 50, replacement of the anode fasteners 102, reattachment of the anode lead 112 and reseating of the lid 20.

From the foregoing description of the illustrative embodiment of the invention set forth herein, it will be apparent that there has been provided an improved method and apparatus for exposing the water flow within a water system to an ion generation device wherein water velocity is increased between the electrodes of the ion generator; where a perpendicular inlet is provided to create a high velocity vortex flow within the system in the vicinity of the ion generator electrodes and which avoids "dead zones," or areas where water velocities in the vicinity of the ion generator electrodes are low; where a non-electrical conducting head is used to mount the electrodes of the ion generator and where a plurality of cooperatively alternating anodes and cathodes may be used; where a discharge valve is provided to control the system water level within the ion generator thereby maintaining a minimum vertical velocity within the system; where a self-cleaning elliptical or conical base to the flow tank is provided; and where a sight glass is utilized to allow for visual inspection of anode wastage.

## Claims

1. An apparatus (10) for generating ions within a water system whereby fouling of the system by algae, nuisance invertebrates, microorganisms and inorganic salts is prevented, which comprises
a water containment tank (12), said tank (12) including a generally cylindrical interior (80),
an ion generating means (50, 60) disposed within said tank interior (80), comprising at least one anode (50) and at least one cathode (60) of like material, the like material being either silver or copper,
means for inletting water to said tank (12), comprising an inlet pipe (30) directing water into said tank (12) and between said anode (50) and cathode (60)
and means (38) for outletting water from said tank (12),
**characterized in that** the plane defined by each electrode (50, 60) is substantially parallel to the axis of said inlet pipe (30), and water flow (4) from the inlet pipe (30) follows an annular wall surface (13) of said tank (12) in a turbulent double vortex flow following water flow between the electrodes (50, 60), said at least one anode (50) and said at least one cathode (60) being oriented in relation to said inlet pipe (30) water flow whereby water flow between the said at least one anode (50) and the said at least one cathode (60) is maximized.

2. The antifouling apparatus (0) of claim 1 wherein said ion generating means (50, 60) is mounted in an upper tank portion (14) of said interior (80).

3. The antifouling apparatus (10) of claim 2 wherein said inlet pipe (30) is disposed generally perpendicularly to the upper portion (14) of said tank interior (80).

4. The antifouling apparatus (10) of claim 3 wherein said containment tank (12) further includes a tank aperture (15) situated at said tank upper portion (14) whereby said tank interior (80) is made accessible through said aperture (15).

5. The antifouling apparatus (10) of claim 4 including a cover member (20) that is functionally adapted to sealingly enclose said tank aperture (15).

6. The antifouling apparatus (10) of claim 5 wherein said cover member (20) is made of an electrically nonconductive material.

7. The antifouling apparatus (10) of any preceding claim having an electronic polarity reverser for periodically reversing the polarity of the electrodes (50, 60).

8. The antifouling apparatus (10) of claim 7 wherein said ion generating means (50, 60) includes means (102, 104) for attaching the at least one anode (50) and the at least one cathode (60) to said tank cover member (20) in proximal spatial relation whereby ions are generated therebetween.

9. The antifouling apparatus (10) of claim 8 wherein said containment tank (12) includes a sight glass (84) defined within a tank side wall (13) whereby the tank interior (80) may be visualized.

10. The antifouling apparatus (10) of any one of claims 1 to 9 wherein said at least one anode (50) and said at least one cathode (60) are each configured as a plate-like rectangular prism.

11. A method for generating ions within a water system whereby fouling of the system by algae, nuisance invertebrates, microorganisms and inorganic salts is prevented, which comprises the steps of
providing a water containment tank (12), said tank including a generally cylindrical tank interior (80), providing at least one anode (50) and at least one cathode (60) of either copper or silver,
said anode (50) and cathode (60) being of like material, orienting the planes of said at least one anode (50) and the at least one cathode (60) parallel to the axis of an inlet pipe (30) whereby water flow between the said at least one anode (50) and the said at least one cathode (60) is maximized,
inletting water via the inlet pipe (30) to said tank interior (80),
directing water between the anode (50) and the cathode (60),
flowing water through said tank interior (80) such that the water follows the annular wall surface (13) of the tank (12) in a turbulent double vortex-type fashion, outletting water from said tank interior (80), and generating ions within said tank interior (80) between the anode (50) and the cathode (60), whereby ions are introduced into the water flow within said tank interior (80).

12. The antifouling method of claim 11 including providing an inlet pipe (30) which is disposed generally perpendicularly to the upper portion (14) of said tank interior (80) whereby water is introduced to the tank interior (80) in a turbulent vortex manner.

13. The antifouling method of claim 12 including providing a tank aperture (15) situated at said tank upper portion (14) whereby said tank interior (80) is made accessible through said aperture (15) and the step of providing a cover member (20) which is functionally adapted to sealingly enclose said tank aperture (15).

14. The antifouling method of claim 13, wherein said cover member is made of an electrically nonconductive material.

15. The antifouling method of claim 11 including providing a sight glass (84) defined within the tank side wall (13) whereby the tank interior (80) may be visualized.

16. The antifouling method of any one of claims 11 to 15 including configuring the said at least one anode (50) and said at least one cathode (60) as a plate-like rectangular prism.

17. The antifouling method of claim 11, wherein the polarity of the electrodes (50, 60) is periodically reversed by an electronic polarity reverser.

## Patentansprüche

1. Eine Vorrichtung (10) zum Erzeugen von Ionen in einem Wassersystem, wodurch Fouling des Systems durch Algen, lästige wirbellose Tiere, Mikroorganismen und anorganische Salze verhindert wird, umfassend
einen Wasser-Containment-Tank (12), wobei der besagte Tank (12) einen allgemein zylinderförmigen Innenraum (80) aufweist,
ein Mittel zum Erzeugen von Ionen (50, 60), welches im besagten Tankinnenraum (80) angeordnet ist, umfassend mindestens eine Anode (50) und mindestens eine Kathode (60) gleichen Materials, wobei das gleiche Material entweder Silber oder Kupfer ist,
ein Mittel zum Einlassen von Wasser in den besagten Tank (12), das ein Einlassrohr (30) umfasst, welches das Wasser in den besagten Tank (12) und zwischen die besagte Anode (50) und Kathode (60) leitet,
und einem Mittel (38) zum Auslassen des Wassers aus dem besagten Tank (12),
**dadurch gekennzeichnet, dass** die von jeder Elektrode (50, 60) definierte Ebene im Wesentlichen parallel zur Achse des besagten Einlassrohrs (30) ist und der Wasserfluss (4) aus dem Einlassrohr (30) in Doppelwirbelströmung einer ringförmingen Wandfäche (13) des besagten Tanks folgt, nach einem Wasserfluss zwischen den Elektroden (50, 60), wobei die besagte mindestens eine Anode (50) und die besagte mindestens eine Kathode (60) in Bezug auf den Wasserfluss des besagten Einlassrohrs (30) ausgerichtet sind, wodurch der Wasserfluss zwischen der besagten mindestens einen (50) und der besagten mindestens einen Kathode (60) maximiert wird.

2. Antifouling-Vorrichtung (10) nach Anspruch 1, wobei das besagte Mittel zum Erzeugen von lonen (50, 60) im oberen Tankteil (14) des besagten Innenraums (80) befestigt ist.

3. Antifouling-Vorrichtung (10) nach Anspruch 2, wobei das besagte Einlassrohr (30) allgemein senkrecht zum oberen Teil (14) des besagten Tankinnenraums (80) angeordnet ist.

4. Antifouling-Vorrichtung (10) nach Anspruch 3, wobei der besagte Containment-Tank (12) weiter eine Tanköffnung (15) aufweist, die sich am besagten oberen Tankteil (14) befindet, durch die der besagte Tankinnenraum (80) zugänglich wird.

5. Antifouling-Vorrichtung (10) nach Anspruch 4 aufweisend ein Abdeckelement (20), das funktionell angepasst ist, um die besagte Tanköffnung (15) dicht zu umschließen.

6. Antifouling-Vorrichtung (10) nach Anspruch 5, wobei das besagte Abdeckelement (20) aus einem elektrisch nichtleitenden Material besteht.

7. Antifouling-Vorrichtung (10) nach einem der vorangehenden Ansprüchen, aufweisend einen elektronischen Polwechsler zum periodischen Wechsel der Polarität der Elektroden (50, 60).

8. Antifouling-Vorrichtung (10) nach Anspruch 7, wobei das besagte Mittel zu Erzeugen von Ionen (50, 60) Mittel (102, 104) aufweist, um die mindestens eine Anode (50) und die mindestens eine Kathode (60) in proximaler Beziehung an dem Tank-Abdeckelement (20) anzubringen, wodurch im Zwischenraum Ionen erzeugt werden.

9. Antifouling-Vorrichtung (10) nach Anspruch 8, wobei der besagte Containment-Tank (12) in einer Seitenwand des Tanks (13) definiertes Schauglas (84) aufweist, wodurch ein Blick in den Tankinnenraum (80) ermöglicht wird.

10. Antifouling-Vorrichtung (10) nach Anspruch 1 bis 9, wobei die besagte mindestens eine Anode (50) und die besagte mindestens eine Kathode (60) jeweils als plattenartige rechtwinklige Prismen gestaltet sind.

11. Ein Verfahren zum Erzeugen von Ionen, wodurch Fouling des Systems durch Algen, lästige wirbellose Tiere, Mikroorganismen und anorganische Salze verhindert wird, welches die folgenden Schritte umfasst:
Bereitstellen eines Wasser-Containment-Tanks (12), wobei der besagte Tank einen allgemein zylinderförmigen Tankinnenraums (80) aufweist,
Bereitstellen mindestens einer Anode (50) und mindestens einer Kathode (60) entweder aus Silber oder aus Kupfer,
wobei die besagte Anode (50) und Kathode (60) aus gleichem Material bestehen,
Ausrichten der Ebenen der besagten mindestens einen Anode (50) und der mindestens einen Kathode (60) parallel zur Achse eines Einlassrohrs (30), wodurch der Wasserfluss zwischen der besagten mindestens einen Anode (50) und der besagten mindestens einen Kathode (60) maximiert wird,
Einlassen des Wassers über das Einlassrohr (30) in den besagten Tankinnenraum (80),
Leiten des Wassers zwischen die Anode (50) und die Kathode (60),
Fluss des Wassers durch den besagten Tankinnenraum (80), so dass das Wasser in Doppelwirbelströmung der ringförmigen Wandfläche (13) des Tanks (12) folgt,
Auslassen des Wassers aus dem besagten Tankinnenraum (80) und
Erzeugen von lonen im besagten Tankinnenraum (80) zwischen der Anode (50) und der Kathode (60), wodurch die lonen in den Wasserfluss im besagten Tankinnenraum (80) eingeleitet werden.

12. Antifouling-Verfahren nach Anspruch 11 umfassend das Bereitstellen eines Einlassrohrs (30), das allgemein senkrecht zum oberen Teil (14) des besagten Tankinnenraums (80) angeordnet ist, wodurch das Wasser in Doppelwirbelströmung in den Tankinnenraum (80) eingeleitet wird.

13. Antifouling-Verfahren nach Anspruch 12 umfassend das Bereitstellen einer Tanköffnung (15), die sich am besagten oberen Tankteil (14) befindet und durch die der besagte Tankinnenraum (80) durch die besagte Öffnung (15) zugänglich wird, sowie dem Schritt des Bereitstellens eines Abdeckelements (20), das funktionell angepasst ist, um die besagte Tanköffnung (15) dicht zu umschließen.

14. Antifouling-Verfahren nach Anspruch 13, wobei das besagte Abdeckelement aus einem elektrisch nichtleitenden Material besteht.

15. Antifouling-Verfahren nach Anspruch 11 umfassend das Bereitstellen eines in einer Seitenwand des Tanks (13) definierten Schauglases (84), das einen Blick in den Tankinnenraum (80) ermöglicht.

16. Antifouling-Verfahren nach einem der Ansprüche 11 bis 15 umfassend die Gestaltung der besagten mindestens einen Anode (50) und der besagten mindestens einen Kathode (60) als plattenartige rechtwinklige Prismen.

17. Antifouling-Verfahren nach Anspruch 11, wobei die Polarität der Elektroden (50, 60) periodisch durch einen elektronischen Polwechsler gewechselt wird.

## Revendications

1. Appareil (10) de production d'ions à l'intérieur d'une installation d'eau destiné à éviter l'encrassement de celle-ci par les algues, la nuisance des invertébrés, les microorganismes et les sels inorganiques, comprenant:
- un réservoir (12) de stockage d'eau, ce réservoir (12) ayant une forme interne (80) globalement cylindrique,
- des moyens producteurs d'ions (50,60) disposés à l'intérieur (80) du réservoir, comprenant au moins une anode (50) et au moins une cathode (60) réalisées dans un même matériau, celui-ci étant soit de l'argent soit du cuivre,
- des moyens d'admission d'eau dans le réservoir (12) constitués d'une conduite d'admission (30) dirigeant l'eau dans le réservoir (12) entre l'anode (50) et la cathode (60),
- et des moyens d'évacuation (38) de l'eau du réservoir (12),
**caractérisé en ce que** le plan défini par chaque électrode (50,60) est sensiblement parallèle à l'axe de ladite conduite d'admission (30), et **en ce que** le flux d'eau (4) provenant de celle-ci suit une surface de paroi annulaire (13) du réservoir (12) dans un double vortex turbulent entre les électrodes (50,60), ladite anode (50) et ladite cathode (60) étant orientées par rapport au flux d'eau de la conduite d'admission (30) de façon que le flux entre ladite anode (50) et ladite cathode (60) soit maximal.

2. Appareil anti-encrassement (10) suivant la revendication 1 dans lequel lesdits moyens producteurs d'ions (50,60) sont disposés en partie supérieure (14) de l'intérieur (80) du réservoir.

3. Appareil anti-encrassement (10) suivant la revendication 2 dans lequel ladite conduite d'admission (30) est disposée globalement perpendiculairement à la partie supérieure (14) de l'intérieur (80) du réservoir.

4. Appareil anti-encrassement (10) suivant la revendication 3 dans lequel ledit réservoir de stockage comprend une ouverture (15) située à sa partie supérieure (14) par laquelle l'intérieur (80) de celui-ci est accessible.

5. Appareil anti-encrassement (10) suivant la revendication 4 dans lequel l'ouverture (15) dudit réservoir de stockage est fermée de façon étanche par un couvercle (20).

6. Appareil anti-encrassement (10) suivant la revendication 5 dans lequel le couvercle (20) est constitué d'un matériau non conducteur du courant électrique.

7. Appareil anti-encrassement (10) suivant l'une des revendications précédentes comportant un inverseur de polarités électronique permettant d'inverser périodiquement la polarité des électrodes (50,60).

8. Appareil anti-encrassement (10) suivant la revendication 7 dans lequel lesdits moyens producteurs d'ions (50,60) comprennent des moyens (102,104) permettant de fixer ladite anode (50) et ladite cathode (60) sur la partie antérieure du couvercle (20) de façon à produire les ions entre celles-ci.

9. Appareil anti-encrassement (10) suivant la revendication 8 dans lequel la paroi latérale (13) du réservoir de stockage (12) comporte un hublot (84) par lequel l'intérieur de celui-ci peut être visualisé.

10. Appareil anti-encrassement (10) suivant l'une des revendications 1 à 9 dans lequel ladite anode (50) et ladite cathode (60) ont chacune la forme d'un prisme rectangulaire aplati.

11. Méthode de production d'ions dans une installation d'eau destinée à éviter l'encrassement de celle-ci par les algues, la nuisance des invertébrés, les microorganismes et les sels inorganiques, comprenant les étapes consistant à :
- mettre en oeuvre un réservoir (12) de stockage d'eau dont la forme interne est globalement cylindrique,
- mettre en oeuvre au moins une anode (50) et au moins une cathode (60) réalisées soit en argent soit en cuivre, ladite anode (50) et ladite cathode (60) étant constituées d'un même matériau,
- orienter les plans de ladite anode (50) et de ladite cathode (60) parallèlement à l'axe d'une conduite d'admission (30) de façon que le flux entre l'anode (50) et la cathode (60) soit maximal,
- admettre l'eau par la conduite d'admission (30) à l'intérieur (80) du réservoir de stockage (12),
- diriger l'eau entre l'anode (50) et la cathode (60),
- faire s'écouler l'eau à l'intérieur (80) du réservoir de façon que celle-ci suive la surface (13) de sa paroi annulaire de façon à former un double vortex turbulent, faire sortir l'eau de l'intérieur (80) du réservoir et générer des ions à l'intérieur (80) de celui-ci entre l'anode (50) et la cathode (60) et à introduire ces ions dans le flux d'eau à l'intérieur du réservoir.

12. Méthode anti-encrassement suivant la revendication 11 dans laquelle on met en oeuvre une conduite d'admission (30) disposée sensiblement perpendiculaire à la partie supérieure (14) de l'intérieur (80) du réservoir, destinée à introduire l'eau dans celui-ci sous forme d'un vortex turbulent.

13. Méthode anti-encrassement suivant la revendication 12 dans laquelle on dispose une ouverture (15) à la partie supérieure (14) du réservoir de façon à le rendre accessible par cette ouverture, et on dispose un couvercle (20) conçu pour fermer de façon étanche cette ouverture.

14. Méthode anti-encrassement suivant la revendication 13 dans laquelle ledit couvercle est réalisé en un matériau non conducteur du courant électrique.

15. Méthode anti-encrassement suivant la revendication 11 dans laquelle on dispose un hublot dans la paroi latérale (13) du réservoir par lequel l'intérieur (80) de celui-ci peut être visualisé.

16. Méthode anti-encrassement suivant l'une quelconque des revendications 11 à 15 dans laquelle on donne à ladite anode (50) et à ladite cathode (60) une forme de prisme rectangulaire aplati.

17. Méthode anti-encrassement suivant la revendication 11 dans laquelle on inverse périodiquement la polarité des électrodes (50,60) au moyen d'un inverseur électronique.
